# EUROPÄISCHE PATENTSCHRIFT

(11) **EP 0 540 566 B1**
(45) Veröffentlichungstag und Bekanntmachung des Hinweises auf die Patenterteilung: **02.02.1994**
(21) Anmeldenummer: 91912940.3
(22) Anmeldetag: 23.07.1991
(51) Int. Cl.: B28D 1/12, B23D 59/02, B24D 5/12

(54) **SCHNEIDWERKZEUG**
CUTTING TOOL
OUTIL DE COUPE

(30) Priorität: 25.07.1990 AT 1559/90
(43) Veröffentlichungstag der Anmeldung: 12.05.1993
(73) Patentinhaber: Tyrolit Schleifmittelwerke Swarovski KG, 6130 Schwaz (AT)
(72) Erfinder: HAUSBERGER, Peter, A-6240 Radfeld 150 (AT); KERBER, Benno, A-6130 Schwaz (AT)
(74) Vertreter: Torggler, Paul, Dr.
(86) Internationale Anmeldenummer: AT9100088
(87) Internationale Veröffentlichungsnummer: WO9201542

(56) Entgegenhaltungen:
- EP-A- 0 365 843
- DE-A- 1 917 957
- DE-A- 2 438 601
- FR-A- 1 568 331
- GB-A- 2 053 043
- US-A- 1 931 363
- US-A- 2 369 068
- US-A- 3 496 973
- Patent Abstracts of Japan, Band 6, Nr. 101 (M-135) (979), 10. Juni 1982; & JP-A-57033969 (I. Nirou) 24. Februar 1982
- Patent Abstracts of Japan, Band 7, Nr. 29 (M-191) (1174), 5. Februar 1983; & JP-A-57184674 (I. Nirou) 13. November 1982
- Patent Abstracts of Japan, Band 12, Nr. 296 (M-731) (3143), 12. August 1988; & JP-A-63074567 (Micron Seimitsu K.K.) 5. April 1988
- Patent Abstracts of Japan, Band 10, Nr. 231 (M-506) (2286), 12. August 1986; & JP-A-61065776 (Matsushita Electric Ind. Co. Ltd) 4. April 1986
- World Patents Index, Section PQ, Woche 7825, Derwent Publications Ltd, (London, GB) Class P61, An 78-E9180A, & SU,A,0569440 (YU.L. NEDELIN) 8. September 1977
- Soviet Inventions Illustrated, Section PQ, Woche 8623, Juni 1986, Derwent Publications Ltd (london, GB), Class P54, AN 86-148899, & SU,A,1189652 (A.A. MALYSHEV) 7. November 1985

## Beschreibung

Die Erfindung bezieht sich auf ein rotierendes Schneidwerkzeug, beispielsweise ein Säge blatt, insbesondere zum Schneiden von Gestein, mit einem metallischen Trägerkörper und einem Schleifbesatz aus darauf mit Abstand voneinander befestigten Schneidsegmenten mit einer vorzugsweise metallischen Bindung und Schleifkorn, beispielsweise Diamant, wobei die Kornkonzentration und/oder die Korngröße und/oder die Kornart und/oder die Bindungshärte über den Umfang des Schleifbesatzes unterschiedlich sind.

Die Erfindung kann insbesondere bei Kreissägen zur Anwendung kommen, ist jedoch nicht auf dieses Einsatzgebiet beschränkt. Die erfindungsgemäßen Schneidsegmente sind ebenso beispielsweise bei Hohlbohrern einsetzbar.

Das erfindungsgemäße Schneidwerkzeug entspricht am bestmöglichen den beim Trennen vom Gestein auftretenden Beanspruchungen.

Aus der DE-A1-19 17 957 ist ein Kreissägeblatt bekannt, das mit Schneidsegmenten bestückt sind, die unterschiedliche Schleifkornkonzentration bzw. unterschiedliche Korngröße aufweisen. Auf diese Art ist eine bewußt angestrebte Unrundheit der Kreissäge erzielt, womit erreicht werden soll, daß die Schärfe der Schneidsegmente länger erhalten bleibt.

Aus den Patent Abstracts aus Japan Bd. 6 Nr. 101 (M-135) ist ein rotierendes Schneidwerkzeug mit einem metallischen Trägerkörper und darauf aufgesetzten Schneidsegmenten bekannt, wobei die Schneidsegmente verschiedene Zonen aufweisen, die alternierend mit Diamantschleifkorn und anderem Schleifkorn bestückt sind.

Auf diese Art soll eine bessere Schneidqualität und eine Verminderung des beim Schneiden auftretenden Geräusches erzielt werden.

Die Erfindung geht von der Erkenntnis aus, daß bei einem Schneidwerkzeug der eingangs erwähnten Art, jedes Schneidsegment periodisch wiederkehrende Arbeitsbereiche aufweist, und zwar eine vordere Schneidzone und eine rückwärtige Räumzone.

Die Schneidzone hat die Aufgabe, Gesteinsteilchen (z.B. Minerale) aus dem Gesteinsverband zu lösen und das Volumen des entstehenden Schneidspaltes zu zerspanen. In der Schneidzone wird vor allem das Schleifkorn einer hohen Belastung ausgesetzt. Wenn die Kräfte am stumpfer werdenden Korn zu groß werden, bricht dieses aus und hinterläßt eine Lücke. Durch das fehlende Schleifkorn ist die Bindung einer erhöhten Erosion ausgesetzt und verschleißt sekundär, bis ein neues Schleifkorn den Schutz der Bindung übernehmen kann.

Hingegen hat die Räumzone des Schneidsegmentes die Aufgabe, die zerspanten Gesteinsteilchen aus dem Schneidspalt herauszubefördern. Dabei werden diese Teilchen z.T. noch weiter zerkleinert. Das Schleifkorn ist in diesem Bereich keiner so großen Belastung mehr ausgesetzt. Hier wird vor allem die Bindung durch das abrasive Gesteinsmehl erodiert. Wenn die Bindung so weit erodiert ist, daß das Schleifkorn nicht mehr genügend festgehalten werden kann, bricht das Schleifkorn aus. In der Räumzone tritt also ein primärer Bindungsverschleiß und ein sekundärer Kornverschleiß auf.

Aufgabe der Erfindung ist es, ein Schneidwerkzeug der eingangs erwähnten Art zu verbessern, sodaß insbesondere das teure Schleifkorn, im allgemeinen Diamanten, besser genutzt werden kann und somit die Leistung und/oder Lebensdauer des Schneidwerkzeuges erhöht wird.

Die erfindungsgemäße Aufgabe wird dadurch gelöst, daß sich die einzelnen Schneidsegmente über ihre Länge in ihrem Aufbau monoton verändern.

Die Befestigung der Schneidsegmente auf dem Trägerkörper kann dabei in herkömmlicher Weise entweder durch Löten oder Schweißen erfolgen.

Vorteilhaft ist vorgesehen, daß die Schleifkornqualität und/oder Schleifkornkonzentration in den Schneidsegmenten über die Länge des Schneidsegmentes variiert.

Ein Ausführungsbeispiel der Erfindung sieht vor, daß die Schleifkorngröße über die Länge der Schneidsegmente variiert.

Erfindungsgemäß kann weiters vorgesehen sein, daß die Schleifkorngröße im vorderen Bereich der Schneidsegmente am größten ist und über die Länge der Schneidsegmente abnimmt.

Die Begriffe vorne und hinten beziehen sich auf die Drehrichtung des Schneidwerkzeuges.

Vorteilhaft ist die Schleifkornkonzentration im vorderen Bereich der Schneidsegmente am größten und nimmt über die Länge der Schneidsegmente ab.

Ein weiteres Ausführungsbeispiel der Erfindung sieht vor, daß die Bindung im vorderen Bereich der Schneidsegmente elastischer ist als im rückwärtigen Bereich.

Ein weiteres erfindungsgemäßes Ausführungsbeispiel sieht vor, daß mehrere, vorzugsweise zwei, unterschiedliche Schneidsegmentteile mit in sich homogenem Aufbau unmittelbar hintereinander am Trägerkörper befestigt sind und so jeweils ein Schneidsegment bilden.

Zwischen den Schneidsegmentteilen, das heißt zwischen der Schneidzone und der Räumzone darf kein Abstand sein, da ansonsten der Schneidsegmentteil der Räumzone wieder wie ein Schneidsegmentteil der Schneidzone beansprucht wurde.

Nachfolgend wird die Erfindung anhand der Figuren der beiliegenden Zeichnungen beschrieben.

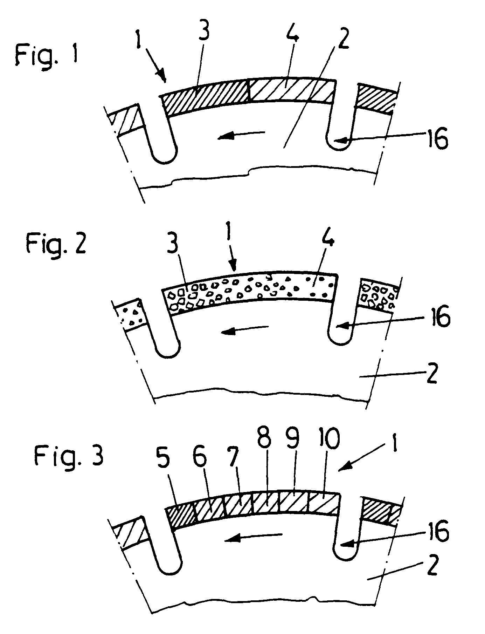

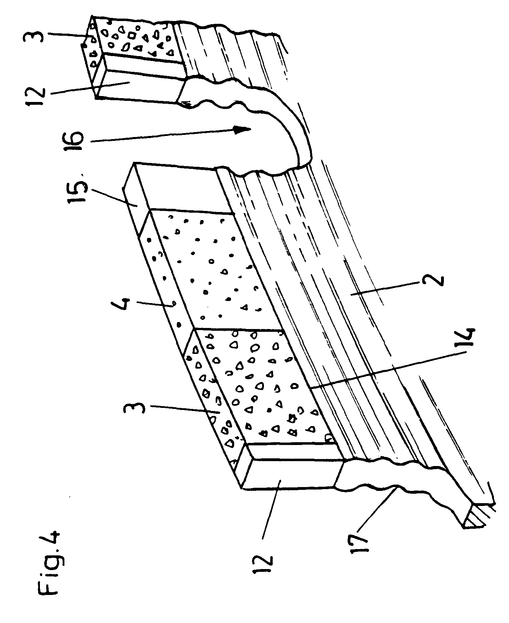

Die Fig. 1 bis 3 zeigen jeweils eine Seitenansicht eines Ausschnittes einer Kreissäge und die Fig. 4 zeigt ein Schaubild eines erfindungsgemäßen Schneidsegmentes und eines Abschnittes des Trägerkörpers.

Wie in der Fig. 1 dargestellt, besteht das erfindungsgemäße Schneidsegment 1 aus einer vorderen Schneidzone 3 und einer hinteren, unmittelbar an die Schneidzone 3 anschließenden Räumzone 4, wobei sich die Schneidzone 3 und die Räumzone 4 durch unterschiedlichen Schleifkornanteil und/oder unterschiedliche Bindungseigenschaften voneinander unterscheiden.

Der Trägerkörper des Schneidwerkzeuges trägt das Bezugszeichen 2.

Die erforderlichen Eigenschaften der Schneidzone 3 kon- nen durch folgende Merkmale oder einer Kombination folgender Merkmale erzielt werden:
hohe Schleifkorn-(Diamant-)konzentration grobe Korngröße
gute Diamantqualitäten
elastische, dämpfende Bindung (Sandwich-Bauweise: diese bewirkt einen erhöhten Kanten-schutz)

Die erforderlichen Eigenschaften der Räumzone 4 können durch folgende Merkmale oder einer Kombination folgender Merkmale erreicht werden:
Diamantqualitäten mit geringerem Festigkeitsindex
zumindestens teilweiser Ersatz von Diamant durch anderes Schleifkorn, beispielsweise kubisches Bornitrid
kleinere Korngrößen
Bindung mit erhöhtem Widerstand gegen Abrasivität

Eine der Möglichkeiten, die Erfindung zu verwirklichen, zeigt die Fig. 1. Dabei wird ein Schneidzone 3 bildendes Teil unmittelbar vor einem die Räumzone 4 bildendes Teil am Trägerkörper 2 befestigt. Das Teil, das die Schneidzone 3 bildet und das Teil, das die Räumzone 4 bildet, kann jeweils einen komplett anderen Aufbau als das andere Teil aufweisen. Wie bereits erwähnt, kann die Funktion des Bindungsschutzes in der Räumzone 4 auch durch Hartstoffe, konventionelle Schneidstoffe oder Mischungen derartiger Stoffe mit Diamant erfolgen.

Der Abtransport der zerspanten Gesteinsteilchen unter Mitwirkung eines Kühlmittels funktioniert umso besser, je offener die Struktur der Bindung der Räumzone 4 ist. Eine derartig offene Struktur der Räumzone 4 kann bei metallgebundenen Systemen durch weiche Zusätze, beispielsweise durch den Zusatz von Graphit, erreicht werden. Es kann auch für die Räumzone 4 ein gänzlich anderes Bindungssystem wie für die Schneidzone 3 vorgesehen sein, beispielsweise eine keramische Bindung oder eine Bindung aus Kunstharz.

Im Ausführungsbeispiel nach der Fig. 2 erfolgt der Übergang von der Schneidzone 3 zur Räumzone 4 nicht sprunghaft sondern kontinuierlich. Das Schneidsegment 1 ändert sich kontinuierlich im Aufbau von vorne nach hinten, sodaß der jeweiligen Beanspruchungsart am besten entsprochen wird. Dies erfolgt beispielsweise durch eine kontinuierliche Konzentrationsänderung des Diamantkorns und/oder durch eine kontinuierliche Änderung der Bindungseigenschaften und/oder durch eine kontinuierliche Änderung des Mischungsverhältnisses von Diamantkorn und Hartstoffen.

Die Bindungseigenschaften können im hinteren Teil des Schneidsegmentes 1, das heißt in der Räumzone 4 durch nachträgliche Vergütung oder Infiltration verändert werden.

Wie in der Fig. 3 gezeigt, kann der kontinuierlichen Änderung der Schneidsegmentbeanspruchung auch durch stufenweises Ändern des Segmentaufbaues Rechnung getragen werden. Dabei können mehrere Segmentteile 5,6,7,8,9,10, deren Aufbau verschieden ist, hintereinander auf dem Trägerkörper 2 befestigt sein.

Die Änderungen im Aufbau der Segmentteile 5 bis 10 vom ersten Segmentteil 5 mit einem Aufbau, der hundertprozentig der Schneidzone 3 entspricnt, bis zum letzten Segmentteil 10 mit einem Aufbau, der hundertprozentig der Räumzone 4 entspricht, kann durch die oben beschriebenen Maßnahmen erreicht werden.

Im Ausführungsbeispiel nach der Fig. 4 weist das Schleifsegment 1 ebenso wie im Ausführungsbeispiel nach der Fig. 1 ein Teil, das die Schneidzone 3 bildet, und einen Teil, das die Räumzone 4 bildet, auf. Vor der Schneidzone 3 ist jedoch eine dünne dämpfende Schicht 12 aus beispielsweise einem Buntmetall vorgesehen.

Das die Schneidzone 3 bildende Teil weist ebenso dämpfende Eigenschaften auf, was durch eine relativ weiche Bindung und eventuell einem Sandwich-Aufbau der Schneidzone 3 erzielt wird.

Weiters ist das Teil, das die Schneidzone 3 bildet, nicht unmittelbar am Trägerkörper 2 befestigt, sondern mittels einer ebenfalls dämpfenden Lötschicht 14.

Das Teil der Räumzone 4 weist wieder eine geringere Schleifkornkonzentration auf, wobei das Diamantkorn teilweise durch Hartstoffe ersetzt ist. Die Bindung ist härter als in der Schneidzone 3.

An die Räumzone 4 schließt ein Festschmierstoffkörper 15 an.

Der Trägerkörper 2 weist in herkömmlicher Weise Kühlschlitze 16 auf und ist im Bereich der Kühlschlitze 16 mit Rillen 17 versehen, die den Spantransport verbessern.

Der Trägerkörper 2 kann ebenso zumindestens im Umfangsbereich oberflächenbehandelt sein.

## Patentansprüche

1. Rotierendes Schneidwerkzeug, beispielsweise ein Säge blatt, insbesondere zum Schneiden von Gestein, mit einem metallischen Trägerkörper (2) und einem Schleifbesatz aus darauf mit Abstand voneinander befestigten Schneidsegmenten (1) mit einer vorzugsweise metallischen Bindung und Schleifkorn, beispielsweise Diamant, wobei der Aufbau der Schneidsegmente (1), der durch die Kornkonzentration und/oder die Korngröße und/oder die Kornart und/oder die Bindungshärte festgelegt ist, über den Umfang des Schleifbesatzes unterschiedlich ist, dadurch gekennzeichnet, daß sich die einzelnen Schneidsegmente (1) über ihre Länge in ihrem Aufbau monoton verändern.

2. Rotierendes Schneidwerkzeug nach Anspruch 1, dadurch gekennzeichnet, daß sich die Schleifkornqualität und/oder Schleifkornkonzentration in den Schneidsegmenten (1) über die Länge des Schneidsegmentes (1) monoton verändert.

3. Rotierendes Schneidwerkzeug nach Anspruch 1, dadurch gekennzeichnet, daß sich die Schleifkorngröße über die Länge der Schneidsegmente (1) monoton verändert.

4. Rotierendes Schneidwerkzeug nach Anspruch 3, dadurch gekennzeichnet, daß die Schleifkorngröße im in Drehrichtung vorderen Bereich der Schneidsegmente (1) am größten ist und über die Länge der Schneidsegmente (1) abnimmt.

5. Rotierendes Schneidwerkzeug nach Anspruch 2, dadurch gekennzeichnet, daß die Schleifkornkonzentration im in Drehrichtung vorderen Bereich der Schneidsegmente (1) am größten ist und über die Länge der Schneidsegmente (1) abnimmt.

6. Rotierendes Schneidwerkzeug nach Anspruch 1, dadurch gekennzeichnet, daß die Bindung im in Drehrichtung vorderen Bereich der Schneidsegmente (1) elastischer ist als im rückwärtigen Bereich.

7. Rotierendes Schneidwerkzeug nach mindestens einem der Anspruche 1 bis 6, dadurch gekennzeichnet, daß die Bindungseigenschaft sich über die Länge eines Schneidsegmentes (1) monoton verändert.

8. Rotierendes Schneidwerkzeug nach mindestens einem der Ansprüche 1 bis 7, dadurch gekennzeichnet, daß am in Drehrichtung hinteren Ende der Schneidsegmente (1) ein Festschmierstoffkörper (15) angeordnet ist.

9. Rotierendes Schneidwerkzeug nach Anspruch 8, dadurch gekennzeichnet, daß sich an den in Drehrichtung vorderen Enden der Schneidsegmente (1) eine schneidkornfreie schlagdämpfende Schichte (12) befindet.

10. Rotierendes Schneidwerkzeug nach mindestens einem der Ansprüche 1 bis 10, dadurch gekennzeichnet, daß die Schneidsegmente (1) bereichsweise Diamantkorn und Hartstoffe aus anderem Material als Diamant, z.B. Carbide, aufweisen.

## Claims

1. A rotary cutting tool, for example a saw blade, in particular for cutting stone, having a metal carrier body (2) and an abrasive edge comprising cutting segments (1) fixed thereon at a spacing from each other with a preferably metal binder and abrasive grain, for example diamond, wherein the structure of the cutting segments (1) which is fixed by the grain concentration and/or the grain size and/or the grain type and/or the binder hardness is different over the periphery of the abrasive edge, characterised in that the individual cutting segments (1) monotonically vary in their structure over their length.

2. A rotary cutting tool according to claim 1 characterised in that the abrasive grain quality and/or abrasive grain concentration in the cutting segments (1) monotonically varies over the length of the cutting segment (1).

3. A rotary cutting tool according to claim 1 characterised in that the abrasive grain size monotonically varies over the length of the cutting segments (1).

4. A rotary cutting tool according to claim 3 characterised in that the abrasive grain size is greatest in the region of the cutting segments (1), which leads in the direction of rotation, and decreases over the length of the cutting segments (1).

5. A rotary cutting tool according to claim 2 characterised in that the abrasive grain concentration is greatest in the region of the cutting segments (1), which leads in the direction of rotation, and decreases over the length of the cutting segments (1).

6. A rotary cutting tool according to claim 1 characterised in that the binder is more elastic in the region of the cutting segments (1), which leads in the direction of rotation, than in the rearward region.

7. A rotary cutting tool according to at least one of claims 1 to 6 characterised in that the binding property monotonically varies over the length of a cutting segment (1).

8. A rotary cutting tool according to at least one of claims 1 to 7 characterised in that a solid lubricant body (15) is arranged at the end of the cutting segments (1), which trails in the direction of rotation.

9. A rotary cutting tool according to claim 8 characterised in that a cutting grain-free impact-damping layer (12) is disposed at the ends of the cutting segments (1), which lead in the direction of rotation.

10. A rotary cutting tool according to at least one of claims 1 to 10 characterised in that the cutting segments (1) have in a region-wise manner diamond grain and hard substances of other material than diamond, for example carbides.

## Revendications

1. Outil coupant rotatif, par exemple une lame de scie, en particulier pour découper de la roche, avec un corps formant support (2) métallique et un accessoire de meulage, composé de segments de coupe (1), fixés dessus à distance les uns des autres, avec une liaison de préférence métallique et un produit de meulage en grains, par exemple en diamant, la structure des segments de coupe (1), fixée par la concentration en grains et/ou la taille des grains et/ou le type de grains et/ou la dureté de la liaison, diffère sur l'étendue de la périphérie de l'accessoire de meulage, caractérisé en ce que les différents segments de coupe (1) présentent une variation monotone sur leur longueur de leur structure.

2. Outil coupant rotatif selon la revendication 1, caractérisé en ce que la qualité des grains de meulage et/ou la concentration des grains de meulage dans les segments de coupe (1) varient de façon monotone sur la longueur de l'élément de coupe (1).

3. Outil coupant rotatif selon l'une des revendications 1 ou 2, caractérisé en ce que la taille du grain de meulage varie de façon monotone sur la longueur des segments de coupe (1).

4. Outil coupant rotatif selon la revendication 3, caractérisé en ce que la taille des grains de meulage (1) est maximale dans la zone, placée à l'avant dans le sens de rotation, des segments de coupe (1) et diminue sur la longueur des segments de coupe (1).

5. Outil coupant rotatif selon la revendication 2, caractérisé en ce que la concentration en grains de meulage est maximale dans la zone, placée à l'avant dans le sens de rotation, des segments de coupe (1) et diminue sur la longueur des segments de coupe (1).

6. Outil coupant rotatif selon la revendication 1, caractérisé en ce que la liaison est plus élastique dans la zone, placée à l'avant dans le sens de rotation, des segments de coupe (1) que dans la zone arrière.

7. Outil coupant rotatif selon au moins l'une des revendications 1 à 6, caractérisé en ce que la propriété de liaison varie de façon monotone sur la longueur d'un segment de coupe (1).

8. Outil coupant rotatif selon au moins l'une des revendications 1 à 7, caractérisé en ce qu'un corps formant lubrifiant solide (15) est disposé aux extrémités, placées à l'arrière dans le sens de rotation des segments de coupe (1).

9. Outil coupant rotatif selon la revendication 8, caractérisé en ce qu'une couche (12) amortissant les chocs et exempte de grains de coupe se trouve aux extrémités, placées à l'avant dans le sens de rotation, des segments de coupe (1).

10. Outil coupant rotatif selon au moins l'une des revendications 1 à 10, caractérisé en ce que les segments de coupe (1) présentent par zones des grains de diamant et des substances dures en un autre matériau que le diamant, par exemple en carbure.
